# DEMANDE DE BREVET EUROPEEN

(11) **EP 2 381 407 A1**
(43) Date de publication de la demande: **26.10.2011**
(21) Numéro de dépôt: 11163206.3
(22) Date de dépôt: 20.04.2011
(51) Int. Cl.: G06Q 20/00

(54) **Système et procédé de paiement en ligne suivant le principe du serveur d'autorisation miroir**

(30) Priorité: 20.04.2010 FR 1001672
(71) Demandeur: Oonetic, 31300 Toulouse (FR)
(72) Inventeur: Guedj, Marc, 31300 Toulouse (FR)
(74) Mandataire: Fourcade, Emmanuelle

(57) **Abrégé**

La présente invention a pour objet un système et un procédé de paiement en ligne sur le réseau internet, capable de gérer plusieurs transactions provenant de divers participants et concourant à un même paiement sur le compte bancaire d'un marchand.

Dans nombre de cas, les modifications aptes à rendre un serveur marchand capable de gérer des transactions de plusieurs participants concourant à un même paiement sont difficiles voire impossibles à réaliser car l'architecture dudit serveur est imposée par la structure de la plateforme e-commerce utilisée.

Dans l'invention, un serveur (4) dit serveur d'autorisation miroir est ajouté et connecté à un ensemble formé typiquement par un ordinateur client (1), un serveur marchand (2) et un serveur d'autorisation bancaire (3). En particulier, le serveur d'autorisation miroir est utilisé pour se substituer au véritable serveur d'autorisation bancaire dans le but de réaliser certaines opérations.

## Description

La présente invention a pour objet un système et un procédé de paiement en ligne sur le réseau internet, capable de gérer plusieurs transactions provenant de divers participants et concourant à un même paiement sur le compte bancaire d'un marchand.

L'expression « paiement en ligne » est entendue ici comme l'action de transférer de l'argent par voie électronique vers le compte bancaire d'un marchand, sans intermédiaire financier ni compte bancaire tampon.

### Préambule

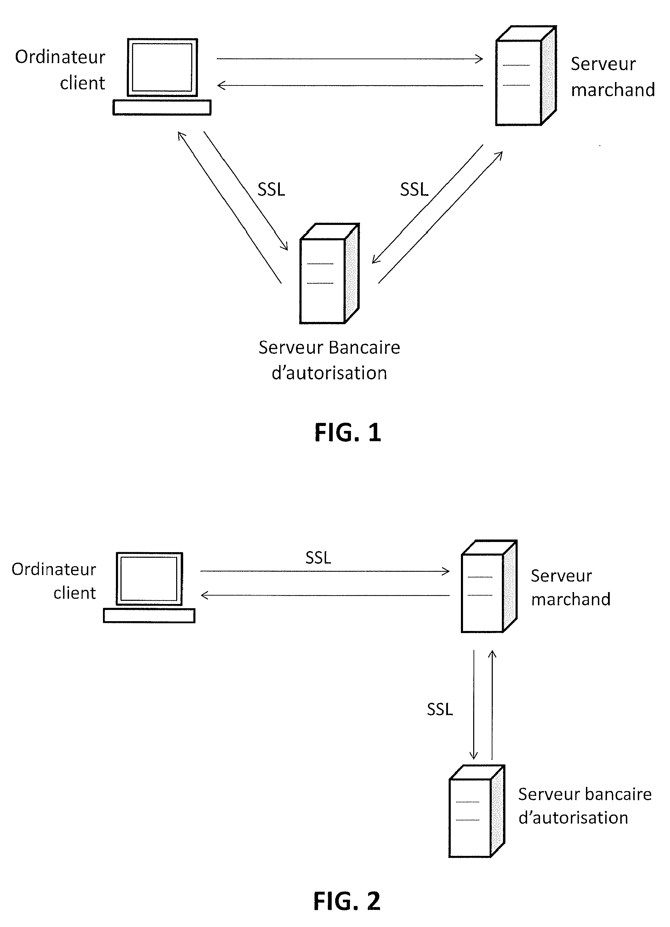

Les systèmes de paiement en ligne classiques associent un client unique à un paiement donné. Le système de paiement le plus répandu et dit « classique » est illustré à la figure 1.

Ledit système classique est constitué d'un ordinateur client, d'un serveur appartenant ou connecté à l'organisme financier gérant le compte du marchand et dit serveur d'autorisation bancaire, et d'un serveur marchand hébergeant le site internet du marchand.

Dans ledit système classique, un des rôles dudit serveur d'autorisation bancaire est notamment d'envoyer au serveur marchand un message dit **"ticket de réception du paiement"** (ou **ticket de paiement** par simplification) lorsqu'une requête de paiement (avec un numéro de carte bancaire par exemple) lui a été transmise via une connexion sécurisée (SSL) par l'ordinateur client.

Le ticket de paiement étant ainsi délivré, le paiement est réputé accepté et autorisé. La commande peut alors suivre son cours. Les caractéristiques de celle-ci ainsi que le ticket de paiement associé (en général un numéro de transaction bancaire) sont traités et stockés dans la base de données de l'arrière-boutique du serveur marchand (appelée **back office** par l'homme de métier).

Un autre rôle majeur dudit serveur d'autorisation bancaire est bien-sûr de permettre la réalisation de la transaction en elle-même et ceci en décrémentant le compte bancaire du client et en incrémentant le compte bancaire du marchand de la valeur appropriée.

Une variante de ce système de paiement, quoique tout aussi classique, est illustrée à la figure 2. Elle ne diffère du système précédent que par le fait que la requête de paiement est transmise directement audit serveur d'autorisation bancaire par le serveur marchand lui-même, ceci après avoir obtenu les informations de paiement depuis l'ordinateur client (comme un numéro de carte bancaire à débiter).

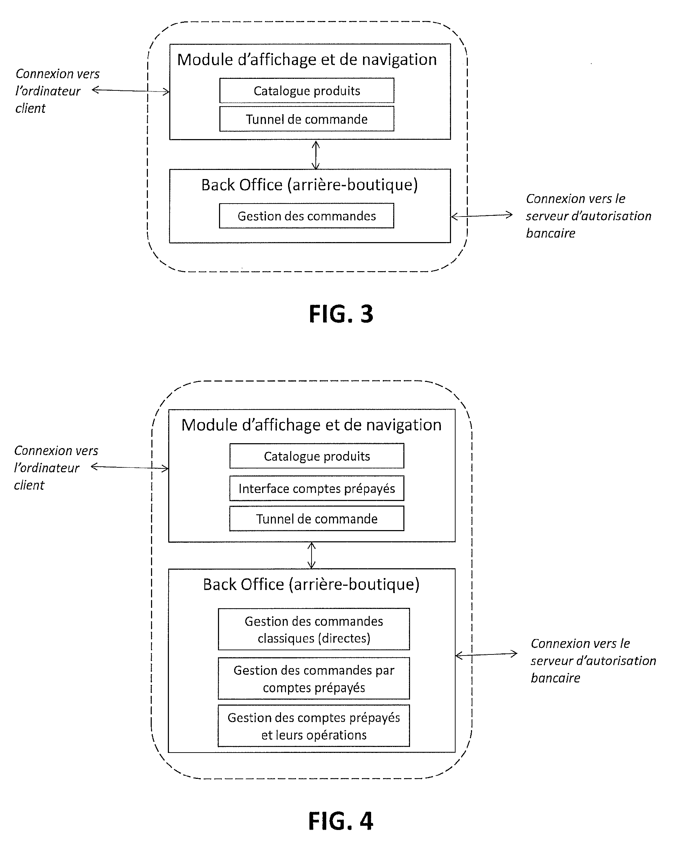

L'architecture typique d'un serveur marchand fonctionnant dans un système de paiement dit classique est illustrée à la figure 3. Un serveur marchand typique est constitué d'un module d'affichage et de navigation (associé à une base de données produits), un module de paiement (appelé généralement tunnel de commande) et une arrière-boutique (appelée back office) permettant la gestion des commandes.

En l'état actuel de la technique, ce type d'architecture dite typique n'est en aucune façon capable de traiter et gérer plusieurs transactions concourant à un même paiement en ligne.

Toujours en l'état actuel de la technique, afin de rendre un serveur marchand capable de telles tâches, une modification substantielle de l'architecture du serveur doit être réalisée.

Cette modification, proche d'une véritable refonte, est particulièrement complexe car elle passe par la prise en charge de comptes prépayés virtuels ce qui impacte notamment le coeur de l'arrière-boutique (back office).

La figure 4 illustre ce type d'architecture qui comprend, outre les modules classiques d'une architecture typique, une interface de gestion des comptes prépayés virtuels, un module de gestion de ces comptes et de leurs opérations d'approvisionnement par des transactions bancaires, un module de gestion et d'enregistrement des commandes payées par les comptes prépayés virtuels.

Pour faire comprendre au lecteur le principe de fonctionnement d'un compte prépayé virtuel (cette notion étant connue par ailleurs), on peut rappeler comme application courante à ce principe, les systèmes de « dons » sur, par exemple, des listes de mariage ou de naissance. Une « liste » représente alors un compte prépayé virtuel.

Dans nombre de cas, les modifications aptes à rendre un serveur marchand capable de gérer des transactions de plusieurs participants concourant à un même paiement sont tout simplement impossibles à réaliser car l'architecture dudit serveur est imposée par la structure de la plateforme e-commerce utilisée et celle-ci n'est pas prévue ou n'est pas suffisamment souple pour supporter de telles modifications.

Lorsque l'architecture du serveur marchand est suffisamment souple, les modifications à réaliser sont lourdes et complexes et représentent un risque technique et financier qui constitue un sérieux frein pour la majorité des marchands en ligne.

### Objectifs de l'invention

La présente invention a donc pour but de fournir un système et un procédé de paiement en ligne capable de gérer plusieurs transactions concourant à un même paiement et qui ne reproduit pas les inconvénients des systèmes susmentionnés.

Plus particulièrement, la présente invention a pour but de fournir un système et un procédé de paiement ne nécessitant pas de modifications substantielles dans l'architecture d'un serveur marchand typique ni dans le process de traitement de commandes de celui-ci.

Egalement, la présente invention a pour but d'être utilisée de façon générique et simple par de nombreux serveurs marchands simultanément.

### Exposé de l'invention

L'invention vise un système de transfert de données, dits "paiements en ligne" comprenant au moins un ordinateur dit "ordinateur client" connecté à un réseau de communication supportant un protocole d'échanges de données de type Internet,
au moins un premier serveur connecté audit réseau et dit "serveur marchand", chaque dit serveur marchand hébergeant au moins un ensemble de données formatées sous la forme de pages adaptées à être transférées sur le réseau et visualisées sur les ordinateurs clients, lesdites données définissant un "site marchand" et au moins un "produit ou service proposé à la vente",
au moins un second serveur connecté audit réseau et dit "serveur d'autorisation bancaire", ledit serveur d'autorisation bancaire hébergeant au moins une base de données associée à au moins un site marchand, cette base de données étant dite "compte bancaire de marchand",
des moyens de modification de données dits "moyens de paiement" du serveur d'autorisation bancaire, ces dits moyens de paiement permettant notamment de transférer, d'additionner ou de soustraire des données vers au moins un compte bancaire de marchand,
ce système comportant :
- au moins un troisième serveur connecté audit réseau et dit "serveur d'autorisation miroir",
- des moyens de créer et d'initialiser, à partir de chaque ordinateur client, au moins un fichier de données virtuel comportant notamment des données numériques, ce fichier de données étant dit "compte prépayé virtuel", cette création et initialisation étant réalisées par l'ordinateur client dans une base de données hébergée sur ledit serveur d'autorisation miroir, le compte prépayé virtuel étant associé à au moins une donnée d'identification unique,
- des moyens d'ajout de données numériques, dits "moyens d'approvisionnement instantané ou différé", de ce ou ces dits comptes prépayés virtuels par le biais d'opérations commandées par le serveur d'autorisation miroir sur le serveur d'autorisation bancaire, sous forme d'ajout numérique au crédit des comptes bancaires des marchands,

En d'autres termes, le système de transfert de données est un système de paiement en ligne. Il comprend un ou plusieurs ordinateurs dits ordinateurs clients et connectés au réseau, un ou plusieurs serveurs connectés au réseau et dits serveurs marchands car hébergeant des sites marchands, un serveur connecté au réseau et dit serveur d'autorisation bancaire car appartenant ou connecté à un organisme financier gérant les comptes bancaires des marchands, des moyens de paiement du serveur d'autorisation bancaire permettant de réaliser des paiements directement vers les comptes bancaires des marchands,
ce système comportant :
- un serveur additionnel connecté au réseau et dit serveur d'autorisation miroir,
- des moyens de créer et d'initialiser des comptes prépayés virtuels par les ordinateurs clients sur ledit serveur d'autorisation miroir,
- des moyens d'approvisionnement instantané ou différé de ces dits comptes prépayés par le biais d'opérations commandées par le serveur d'autorisation miroir sur le serveur d'autorisation bancaire au crédit direct des comptes bancaires des marchands,
- des moyens de soustraction de données numériques dits moyens de débit des comptes prépayés virtuels sur le serveur d'autorisation miroir.

Selon diverses mises en oeuvre éventuellement utilisées conjointement, le système de transfert de données comporte également :
- des moyens d'accès aux comptes prépayés virtuels depuis les ordinateurs clients, ledit accès étant contrôlé par demande de l'identifiant associé au compte prépayé virtuel,
- des moyens de détection permettant de détecter depuis quel serveur marchand les comptes prépayés virtuels sont consultés,
- des moyens d'enregistrement, dans une base de données d'opérations, des opérations réalisées sur les comptes prépayés virtuels.

Selon une mise en oeuvre préférée, le système de paiement en ligne est tel que le serveur miroir d'autorisation comprend un moyen de communication par réseau utilisant des entrées et des sorties ayant des formats identiques à celles du moyen de communication du serveur d'autorisation bancaire.

Selon une mise en oeuvre avantageuse, le moyen de communication sur le serveur d'autorisation miroir comprend, à l'instar du serveur d'autorisation bancaire, des moyens de générer et de transmettre via le réseau internet, un message dit "ticket de réception de paiement". Ce message est une information, obtenue après comparaison numérique entre le solde d'un compte prépayé virtuel et le montant associé à une commande, selon laquelle ce compte prépayé dispose ou non du solde nécessaire pour la validation de cette commande, c'est-à-dire supérieur ou égal à la valeur de ladite commande.

Une commande est définie comme un enregistrement d'une information dans une base de données du serveur marchand selon laquelle un ordinateur client a transmis via le réseau (internet dans le cas présent) un message formaté selon un protocole prédéfini, et correspondant à une demande de fourniture d'au moins un bien ou un service proposé à la vente. Des données de définition de ce bien ou service sont stockées dans une base de données du site marchand, et ces données sont affichées sous forme de pages adaptées à être transférées sur le réseau et visualisées sur les ordinateurs clients.

Le ticket de réception de paiement est ensuite traité par le serveur marchand afin de mettre à jour la base de données des commandes.

On comprend en d'autres termes que le serveur d'autorisation miroir génère un ticket de réception de paiement utilisable par le serveur marchand lorsqu'une commande est passée depuis un ordinateur client au moyen d'un crédit disponible sur un compte prépayé appartenant audit ordinateur client.

Selon une mise en oeuvre avantageuse, le système de paiement en ligne comporte des moyens de détection des serveurs marchands consultés par les ordinateurs clients et des moyens d'affichage adaptés aux serveurs marchand détectés.

Une consultation du serveur marchand par un ordinateur client consiste en une requête suivant un protocole de type HTTP (connu en soi par l'homme de métier), envoyé par un ordinateur client au serveur marchand dans le but de permettre un affichage spécifique sur l'ordinateur client."

Un affichage adapté au serveur marchand détecté est un affichage dont les caractéristiques graphiques (couleurs, formes, logos) sont basés sur l'affichage habituel fourni par le serveur marchand consulté par les ordinateurs clients."

Selon une mise en oeuvre avantageuse, le système de paiement en ligne comporte des moyens d'identification des ordinateurs clients disposant des comptes prépayés virtuels, notamment par identifiant et mot de passe.

Dans un mode particulier de réalisation, un identifiant unique est associé à chaque ordinateur client et un mot de passe assure la sécurité de l'accès aux données. Une connexion cryptée suivant un protocole de type protocole SSL ("Secure Socket Layer") connu par l'homme de métier assure l'intégrité et la confidentialité des données d'identification lors du transfert de celles-ci via le réseau internet entre les ordinateurs clients et le serveur miroir d'autorisation.

Avantageusement, le système de paiement en ligne comporte des moyens d'annulation des débits des comptes prépayés, dans le but d'annuler une commande passée au moyen d'un des ces comptes prépayés virtuels.

Selon une autre mise en oeuvre, éventuellement utilisée en conjonction avec les précédentes, le système de paiement en ligne comporte des moyens d'annulation et de remboursement des provisions (c'est-à-dire du solde, si celui-ci est positif) portées au crédit des comptes prépayés virtuels.

L'invention vise sous un second aspect un procédé de paiement en ligne pour système comportant :
au moins un ordinateur dit "ordinateur client" connecté à un réseau de communication supportant un protocole d'échanges de données de type Internet,
au moins un premier serveur connecté audit réseau et dit "serveur marchand", chaque dit serveur marchand hébergeant au moins un ensemble de données formatées sous la forme de pages adaptées à être transférées sur le réseau et visualisées sur les ordinateurs clients, lesdites données définissant un "site marchand",
au moins un second serveur connecté audit réseau et dit "serveur d'autorisation bancaire", ledit serveur d'autorisation bancaire hébergeant au moins une base de données associée à au moins un site marchand, cette base de données étant dite "compte bancaire de marchand",
des moyens de modification de données dits "moyens de paiement" du serveur d'autorisation bancaire, ces dits moyens de paiement permettant notamment de transférer, d'additionner ou de soustraire des données vers au moins un compte bancaire de marchand,

Le procédé comporte des étapes :
- de création et d'initialisation de comptes prépayés virtuels par les ordinateurs clients sur ledit serveur d'autorisation miroir,
- d'approvisionnement instantané ou différé de ces dits comptes prépayés par le biais d'opérations commandées par le serveur d'autorisation miroir sur le serveur d'autorisation bancaire au crédit direct des comptes bancaires des marchands,
- de débit des comptes prépayés sur le serveur d'autorisation miroir dans le but de valider des commandes passées sur le serveur marchand et payées par les comptes prépayés virtuels,
- d'enregistrement des opérations réalisées sur les comptes prépayés virtuels.

Avantageusement, le procédé comporte également des étapes :
- d'identification, de consultation et de contrôle de ces comptes prépayés virtuels depuis les ordinateurs clients,
- de détection permettant d'identifier depuis quel site internet marchand les comptes prépayés virtuels sont consultés,

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :
La figure 1 (déjà citée) illustre de façon schématique le principe de fonctionnement d'un système de paiement le plus répandu et dit « classique »,
La figure 2 (déjà citée) illustre de même une variante de ce système dit "classique",
La figure 3 (déjà citée) illustre une architecture typique d'un serveur marchand fonctionnant dans un système de paiement dit "classique",
La figure 4 (déjà citée) illustre une variante de cette architecture classique,
La figure 5 est un schéma simplifié montrant le principe de la présente invention,
La figure 6 est un schéma fonctionnel d'une architecture typique d'un serveur marchand fonctionnant avec la présente invention,

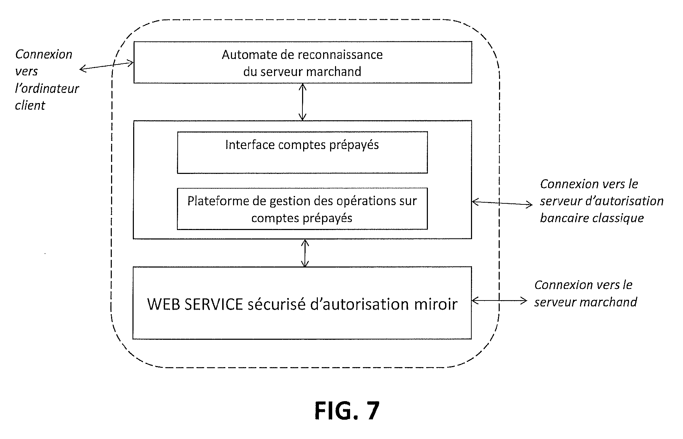

La figure 7 est un schéma fonctionnel d'une architecture possible d'un serveur d'autorisation miroir fonctionnant suivant l'invention.

### Description détaillée d'un mode de réalisation de l'invention

L'invention est un procédé destiné à être mis en oeuvre sous forme de logiciel sur des machines informatiques de type micro-ordinateur (ordinateur personnel), serveur de données ou ordinateur central ("main frame"), connu en soi. Ces ordinateurs et serveurs de données sont supposés reliés entre eux par un réseau de communication supportant un protocole d'échanges de données de type Internet.

Le principe de l'invention repose sur le fait qu'un serveur (4) dit **serveur d'autorisation miroir** soit ajouté et connecté à un ensemble formé par un ordinateur client (1), un serveur marchand (2) et un serveur d'autorisation bancaire (3).

Il est entendu que plusieurs ordinateurs clients (10) peuvent se connecter simultanément à un même serveur d'autorisation miroir (4). De même, plusieurs serveurs marchands (2) peuvent se connecter simultanément audit serveur d'autorisation miroir (4).

Dans une première étape, un ordinateur client (1) se connecte au serveur marchand (2), celui-ci disposant de moyens appropriés permettant d'afficher un ou plusieurs liens vers le serveur (4). Ces liens incluent un moyen de détection du serveur marchand (2). Ce moyen peut par exemple être constitué par un script JavaScript installé sur le site marchand et contenant une clé unique associée à ce site. En cliquant sur un de ces liens, le serveur marchand (2) appelant est reconnu et identifié par le serveur (4) appelé.

Le serveur (4), disposant d'un moyen d'affichage approprié, permet à l'ordinateur client, notamment s'il s'agit d'une première connexion, la création d'un compte « organisateur » auquel il sera possible d'accéder ultérieurement avec un identifiant et un mot de passe.

A ce compte client est associé, via une base de donnée sur le serveur (4) au moins un compte prépayé qu'il sera par la suite possible d'approvisionner. A chaque compte prépayé est associée une adresse url unique d'accès sur le serveur (4) et des moyens d'affichage adaptés au site marchand associé, c'est-à-dire au site ayant été détecté initialement à la création du compte client.

D'un point de vue technique, les moyens d'affichage adaptés à chaque site marchand peuvent, par exemple, être constitués par un jeu de fichiers modèles HTML et CSS, chacun de ces fichiers étant appelé par un moteur de modèles (nommé moteur de Templates par les hommes du métier) en fonction du site marchand détecté préalablement.

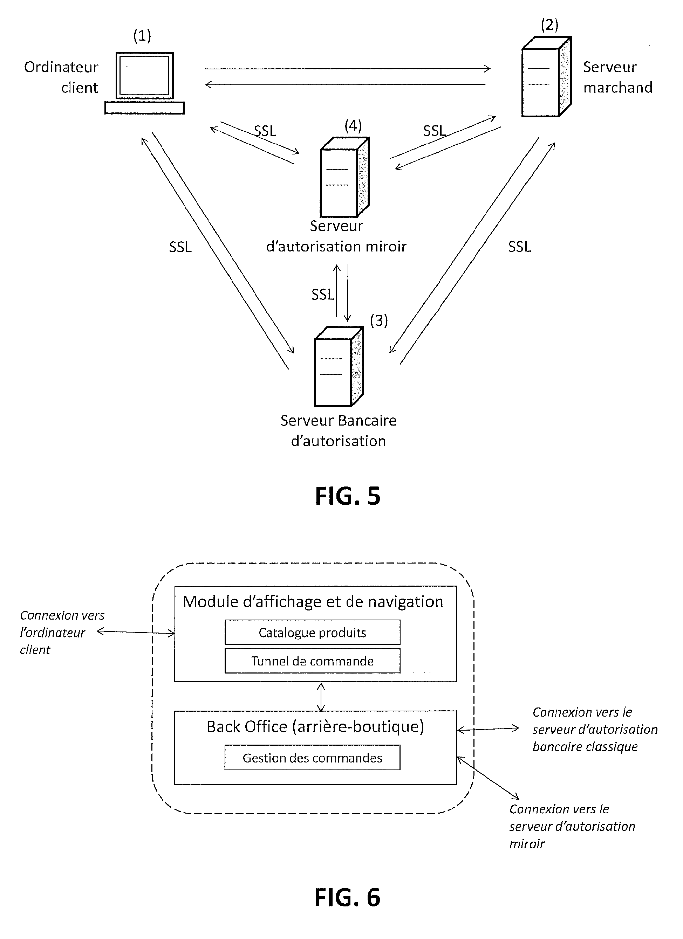

Dans le cas d'un paiement simple d'une commande passée sur le site marchand, le parcours triangulaire classique constitué d'un ordinateur client (1), du serveur marchand (2) et du serveur d'autorisation bancaire (3) est suivi. Le serveur marchand (2) effectue ainsi une demande d'autorisation de transaction au serveur bancaire d'autorisation (3).
1/ Dans le cas d'une contribution à un paiement, c'est-à-dire d'approvisionnement d'un compte prépayé virtuel, le parcours suivi, spécifique à la présente invention, est maintenant formé d'un nouveau triangle constitué d'un ordinateur client (1), du serveur miroir d'autorisation (4) et du serveur d'autorisation bancaire (3).
   On remarque ici, figure 5, que le serveur (4) s'est substitué au serveur marchand (2) dans le but d'effectuer la demande d'autorisation de transaction au serveur bancaire (3) en lieu et place du serveur marchand (2).
   Ainsi, un ordinateur client (1) agissant comme « contributeur » se connecte, via l'url dédiée à cet effet, au compte prépayé enregistré sur le serveur (4). Le compte prépayé étant associé à un ordinateur client et celui-ci étant lui-même associé à un serveur marchand, le site marchand associé est reconnu et détecté.
   Via des moyens d'affichage adaptés au site marchand et disponible sur le serveur (4), il est ainsi proposé à l'ordinateur client « contributeur » d'approvisionner le compte prépayé. La demande d'approvisionnement est transmise par le serveur (4) au serveur d'autorisation bancaire (3) sous la forme d'une demande d'autorisation classique.
   Les moyens de paiement proposés à l'ordinateur client « contributeur » sont les moyens de paiement acceptés par le serveur d'autorisation bancaire (3). Lorsque la demande d'autorisation est traitée par le serveur d'autorisation bancaire (3), celui-ci génère un ticket de paiement qui est utilisée par le serveur (4) pour provisionner ou non le compte prépayé enregistré sur ce serveur.
   Ainsi, et en suivant le même principe, plusieurs ordinateurs client (1) peuvent approvisionner le même compte prépayé sur le serveur (4). Le serveur (4), disposant de moyens d'enregistrement appropriés enregistre chacune des contributions et est capable de calculer le montant total cumulé disponible sur le compte prépayé.
   Par la suite, l'ordinateur client (1) dit « organisateur » dispose donc de certaines provisions sur son compte prépayé qui peuvent ainsi être utilisées pour passer une commande.
2/ Dans le cas d'une commande utilisant un compte prépayé, le parcours suivi, spécifique à la présente invention, est maintenant constitué d'un autre triangle formé par l'ordinateur client (1) dit « organisateur », le serveur marchand (2) et le serveur d'autorisation miroir (4).

On remarque ici que le serveur d'autorisation miroir (4) s'est substitué au serveur d'autorisation bancaire (3) dans le but, cette fois, de recevoir la demande d'autorisation de transaction et d'émettre le ticket de paiement en lieu et place du serveur d'autorisation bancaire (3).

Ainsi, l'ordinateur client (1) dit « organisateur » doit se connecter au serveur marchand (2) associé au compte prépayé, ceci dans le but de passer une commande sur le site marchand correspondant.

Par des moyens d'affichage propre au serveur marchand (2), une page de paiement sur le site marchand permet de proposer le paiement au moyen d'un compte prépayé. Choisissant ce mode de paiement, l'ordinateur client (1) se connecte maintenant à son compte client sur le serveur (4).

D'un point de vue technique, ce moyen de connexion est constituée d'une liaison sécurisée (de type SSL) et d'une identification par identifiant et mot de passe. Par ailleurs, le serveur marchand envoie une demande d'autorisation au serveur miroir d'autorisation (4) correspondant au montant de la commande.

Une fois l'ordinateur client identifié sur le serveur (4), des moyens d'affichage appropriés sur ce serveur permettent d'afficher et de sélectionner chacun des comptes prépayés associés au compte client identifié.

Un compte prépayé est choisi parmi les comptes existants puis, des moyens simples de comparaison entre le cumul des provisions disponibles sur le compte prépayé et le montant de la demande d'autorisation (correspondant normalement au montant de la commande) permet au serveur d'autorisation miroir (4) d'émettre un ticket de paiement utilisable par le serveur marchand (2) afin de valider ladite commande ou bien de proposer un paiement complémentaire si nécessaire, qui dans ce cas suivra le parcours d'une contribution (parcours déjà détaillé auparavant).

D'un point de vue technique, le serveur d'autorisation miroir (4) comprend des moyens de communication capables de recevoir et traiter des requêtes (les demandes d'autorisation) et de renvoyer des réponses (les tickets ou reçu de paiement par exemple).

Lesdits moyens de communication sont appelés couramment « web services » par l'homme de métier. Le serveur d'autorisation bancaire (3) comprend lui-même des moyens de communication de type « web services ».

Il est particulièrement avantageux de faire en sorte que le « web service » du serveur (4) comprenne les mêmes fonctions et exactement les mêmes jeux de variables d'entrées et de sorties (requêtes-réponses) que ceux du serveur d'autorisation bancaire (3), d'où l'appellation de « serveur d'autorisation miroir » pour le serveur (4).

Le principal intérêt est d'éviter des modifications substantielles sur le module d'arrière-boutique (bak office) du serveur marchand (2) lors de la mise place du présent système.

En effet, le serveur marchand (2) est initialement programmé pour communiquer avec le serveur d'autorisation bancaire (3) et traiter dans son module de gestion des commandes les informations provenant de ce serveur.

Pour que le serveur marchand (2) puisse communiquer avec le serveur d'autorisation miroir (4) et traiter les informations de ce serveur, il suffit uniquement, au moment opportun, d'utiliser l'adresse url du serveur d'autorisation miroir (4) en lieu et place du serveur d'autorisation bancaire (3).

De par ce principe, toute autre modification sur le serveur marchand sera superflue. En pratique, l'opération qui consiste à basculer d'un serveur d'autorisation à l'autre est réalisable en ajoutant simplement sur la page de paiement affichée par la serveur marchand un mode de paiement supplémentaire correspondant à l'utilisation des comptes prépayés.

Ainsi, c'est l'ordinateur client, qui par son simple choix entre le mode de paiement standard et le mode de paiement par compte prépayé fera basculer l'url du serveur d'autorisation entre celle du serveur d'autorisation (3) et celle de son serveur miroir (4).

Lorsqu'un ticket de paiement est émis par le serveur d'autorisation (4), des moyens d'enregistrements permettent à celui-ci de mettre à jour la base de données contenant les informations sur les comptes prépayés en soustrayant du cumul des provisions sur ces comptes la valeur du ticket (c'est-à-dire le montant de la commande).

Lorsqu'un compte prépayé déjà provisionné n'est pas utilisé, pour des raisons diverses comme par exemple un cumul des provisions trop faible par rapport à un objectif donné, le serveur (4) hébergeant ce compte prépayé peut, sur demande par exemple d'un ordinateur client (1) « organisateur », effectuer une annulation totale de toutes les opérations d'approvisionnement précédentes.

Cette annulation consiste, pour le serveur (4), à émettre pour chacune des opérations d'approvisionnement enregistrée dans la base dudit serveur, une requête d'annulation et de remboursement au serveur d'autorisation bancaire (3).

Ce serveur bancaire (3), après avoir recrédité les comptes bancaires des différents contributeurs concernés émettra à son tour des tickets d'avis de remboursement en direction du serveur (4).

Le serveur (4) peut alors traiter ces tickets et, via des moyens d'enregistrement appropriés, peut effectuer la mise à jour de la base donnée en décrémentant le compte prépayé de la valeur cumulée des tickets de remboursement.

Egalement, lorsque subsiste un reliquat non utilisé sur un compte prépayé, pour des raisons diverses comme par exemple un cumul des provisions trop important par rapport au paiement final effectué, le serveur (4) hébergeant ce compte prépayé peut, sur demande par exemple d'un ordinateur client (1) « organisateur », effectuer un remboursement du reliquat.

Ce remboursement consiste, pour le serveur (4), à émettre pour chacune des opérations d'approvisionnement enregistrée dans la base dudit serveur, une requête de remboursement partiel au serveur d'autorisation bancaire (3).

Ce serveur bancaire (3), après avoir re-crédité partiellement les comptes bancaires des différents contributeurs concernés au prorata de leurs contributions initiales émettra à son tour des tickets d'avis de remboursement en direction du serveur (4).

Le serveur (4) peut alors traiter ces tickets et, via des moyens d'enregistrement appropriés, peut effectuer la mise à jour de la base donnée en décrémentant le compte prépayé de la valeur cumulée des tickets de remboursement, ce qui a pour conséquence de réduire à zéro le solde du compte prépayé.

### Avantages du procédé

La présente invention peut être utilisée en particulier pour la mise en place d'un système de collectes de dons en ligne pour des listes de mariage ou des listes de naissance hébergées par des sites marchands. Egalement, la présente invention permet la création et l'approvisionnement en ligne de cagnottes pour des achats à plusieurs ou des cadeaux-communs.

Par ailleurs, la présente invention peut par exemple être utilisée avec le serveur bancaire de Paypal (marque déposée) qui propose à lui seul un grand choix de mode de paiements électroniques dont les paiements par cartes bancaires et cartes de crédits. Dans ce cas, le serveur d'autorisation miroir (4) selon l'invention disposera d'un moyen de communication « web service » reprenant les mêmes fonctions, variables d'entrées et de sorties que celles du web service de Paypal (marque déposée).

Le système ainsi conçu et basé sur la présente invention pourra dés lors être utilisé de façon générique sur les nombreux sites marchands proposant déjà le mode paiement Paypal (marque déposée) et ceci sans modification substantielles de ces sites marchands.

Le système selon l'invention ne nécessite pas l'utilisation d'un compte bancaire intermédiaire et s'adapte à l'architecture existante d'un serveur marchand typique tout en évitant des modifications substantielles de celle-ci. Egalement, ce système et procédé peut être utilisé de façon générique par de nombreux serveurs marchands simultanément. Les applications courantes d'un tel système de paiement sont les services de collectes de dons en ligne pour, par exemple, des listes de mariages, des listes de naissance ou des cadeaux-communs en ligne.

### Variantes de réalisation

Bien que la présente invention ait été décrite en référence à un mode de réalisation particulier de celle-ci, il est entendu que toutes modifications peuvent y être apportées par l'homme de métier sans sortir du cadre de la présente invention tel que défini par les revendications annexées.

## Revendications

1. Système de transfert de données, dits "paiements en ligne" comprenant :
au moins un ordinateur (1) dit "ordinateur client" connecté à un réseau de communication supportant un protocole d'échanges de données de type Internet,
au moins un premier serveur (2) connecté audit réseau et dit "serveur marchand", chaque dit serveur marchand hébergeant au moins un ensemble de données formatées sous la forme de pages adaptées à être transférées sur le réseau et visualisées sur les ordinateurs clients, lesdites données définissant un "site marchand" et au moins un "produit ou service proposé à la vente",
au moins un second serveur (3) connecté audit réseau et dit "serveur d'autorisation bancaire", ledit serveur d'autorisation bancaire hébergeant au moins une base de données associée à au moins un site marchand, cette base de données étant dite "compte bancaire de marchand",
des moyens de modification de données dits "moyens de paiement" du serveur d'autorisation bancaire, ces dits moyens de paiement permettant notamment de transférer, d'additionner ou de soustraire des données vers au moins un compte bancaire de marchand,
ce système étant **caractérisé en ce qu'**il comporte :
- au moins un troisième serveur (4) connecté à ce réseau et dit "serveur d'autorisation miroir",
- des moyens de créer et d'initialiser, à partir de chaque ordinateur client, au moins un fichier de données virtuel comportant notamment des données numériques, ce fichier de données étant dit "compte prépayé virtuel", cette création et initialisation étant réalisées par l'ordinateur client dans une base de données hébergée sur ledit serveur d'autorisation miroir, le compte prépayé virtuel étant associé à au moins une donnée d'identification unique,
- des moyens d'ajout de données numériques, dits moyens d'approvisionnement instantané, de ce ou ces dits comptes prépayés par le biais d'opérations commandées par le serveur d'autorisation miroir sur le serveur d'autorisation bancaire, sous forme d'ajout numérique au crédit des comptes bancaires des marchands.
des moyens de soustraction de données numériques dits moyens de débit des comptes prépayés virtuels sur le serveur d'autorisation miroir.

2. Système de transfert de données selon la revendication 1 **caractérisé en ce que** le système comporte également des moyens d'accès aux comptes prépayés virtuels depuis les ordinateurs clients, ledit accès étant contrôlé par demande de l'identifiant associé au compte prépayé virtuel.

3. Système de transfert de données selon l'une quelconque des revendications précédentes, **caractérisé en ce que** le système comporte également des moyens de détection permettant de détecter depuis quel serveur marchand les comptes prépayés virtuels sont consultés.

4. Système de transfert de données selon l'une quelconque des revendications précédentes, **caractérisé en ce que** le système comporte également des moyens d'enregistrement, dans une base de données d'opérations, des opérations réalisées sur les comptes prépayés virtuels.

5. Système de paiement en ligne selon l'une quelconque des revendications précédentes, **caractérisé en ce que** le serveur miroir d'autorisation comprend un moyen de communication par réseau utilisant des entrées et des sorties ayant des formats identiques à celles du moyen de communication du serveur d'autorisation bancaire.

6. Système de paiement en ligne selon l'une quelconque des revendications précédentes **caractérisé en ce que** le moyen de communication sur le serveur d'autorisation miroir comporte des moyens de générer et de transmettre via le réseau, un message dit "ticket de réception de paiement", ce message étant une information, obtenue après comparaison numérique entre le solde d'un compte prépayé virtuel et le montant associé à une commande, selon laquelle ce compte prépayé dispose ou non du solde nécessaire pour la validation de cette commande, c'est-à-dire supérieur ou égal à la valeur de ladite commande.

7. Système de paiement en ligne selon l'une quelconque des revendications précédentes **caractérisé en ce qu'**il comporte des moyens de détection des sites marchands consultés par les ordinateurs clients et des moyens d'affichage adaptés aux sites marchand détectés.

8. Système de paiement en ligne selon l'une quelconque des revendications précédentes **caractérisé en ce qu'**il comporte des moyens d'identification des ordinateurs clients disposant des comptes prépayés, notamment par identifiant et mot de passe.

9. Système de paiement en ligne selon l'une quelconque des revendications précédentes **caractérisé en ce qu'**il comporte des moyens d'annulation des débits des comptes prépayés dans le but d'annuler une commande passée au moyen d'un des ces comptes prépayés.

10. Système de paiement en ligne selon l'une quelconque des revendications précédentes **caractérisé en ce qu'**il comporte des moyens d'annulation et de remboursement des provisions portées au crédit des comptes prépayés.

11. Procédé de paiement en ligne pour dispositif comportant
au moins un ordinateur dits "ordinateur client" (1) connecté à un réseau de communication supportant un protocole d'échanges de données de type Internet,
au moins un premier serveur connecté audit réseau et dit "serveur marchand" (2), chaque dit serveur marchand (2) hébergeant au moins un ensemble de données formatées sous la forme de pages adaptées à être transférées sur le réseau et visualisées sur les ordinateurs clients, lesdites données définissant un "site marchand",
au moins un second serveur connecté audit réseau et dit "serveur d'autorisation bancaire" (3), ledit serveur d'autorisation bancaire hébergeant au moins une base de données associée à au moins un site marchand, cette base de données étant dite "compte bancaire de marchand",
des moyens de modification de données dits "moyens de paiement" du serveur d'autorisation bancaire, ces dits moyens de paiement permettant notamment de transférer, d'additionner ou de soustraire des données vers au moins un compte bancaire de marchand,
au moins un troisième serveur (4) connecté à ce réseau et dit "serveur d'autorisation miroir",
**caractérisé en ce que** le procédé comporte des étapes :
- de création et d'initialisation de comptes prépayés virtuels par les ordinateurs clients sur ledit serveur d'autorisation miroir,
- d'approvisionnement de ces dits comptes prépayés par le biais d'opérations commandées par le serveur d'autorisation miroir sur le serveur d'autorisation bancaire au crédit direct des comptes bancaires des marchands,
- de débit des comptes prépayés virtuels sur le serveur d'autorisation miroir
- d'enregistrement des opérations réalisées sur les comptes prépayés virtuels.
